(19) Europäisches Patentamt
European Patent Office
Office européen des brevets

(11) **EP 2 821 276 A1**

(12) **EUROPÄISCHE PATENTANMELDUNG**

(43) Veröffentlichungstag:
**07.01.2015 Patentblatt 2015/02**

(51) Int Cl.:
***B60L 3/00*** *(2006.01)*   ***B60L 11/18*** *(2006.01)*
***B60L 3/06*** *(2006.01)*

(21) Anmeldenummer: **14175302.0**

(22) Anmeldetag: **01.07.2014**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **02.07.2013 DE 102013106956**

(71) Anmelder: **Xtronic Gmbh
71106 Magstadt (DE)**

(72) Erfinder:
• **Leich, Andreas
71106 Magstadt (DE)**
• **Bach, Florian
71106 Magstadt (DE)**
• **König, Alexander
71106 Magstadt (DE)**

(74) Vertreter: **Weidner Stern Jeschke
Patentanwälte Partnerschaft
Rubianusstraße 8
99084 Erfurt (DE)**

(54) **Energieversorgungsvorrichtung mit parallel geschalteten Batterie Modulen, Elektromotor und Fahrzeug**

(57) Die Erfindung betrifft eine Energieversorgungsvorrichtung mit einer Steuereinheit, einer ersten Batterie und einer zweiten Batterie, wobei die Batterien jeweils wenigstens eine galvanische Zelle, eine Speiseleitung mit zugeordneter Diode und eine Masse aufweisen, wobei die erste und zweite Batterie parallel geschaltet sind und jede Speiseleitung eine Strommesseinrichtung und jede Batterie eine Spannungsmesseinrichtung zwischen der zugehörigen Speiseleitung und der Masse aufweisen, wobei die Steuereinheit derart eingerichtet ist, dass anhand jeweiliger gemessener Stromspeisestärken und/ oder jeweiliger gemessener Spannungswerte und deren Differenzen zueinander eine Abgabeleistung der Ener-gieversorgungsvorrichtung durch die Steuereinheit ge-steuert und/oder geregelt ist.

Fig. 1

EP 2 821 276 A1

**Beschreibung**

Die Erfindung betrifft eine Energieversorgungsvorrichtung mit einer Steuereinheit, einer ersten Batterie und einer zweiten Batterie, wobei die Batterien jeweils wenigstens eine galvanische Zelle, eine Speiseleitung mit zugeordneter Diode und eine Masse aufweisen, wobei die erste und zweite Batterie parallel geschaltet sind und jede Speiseleitung eine Strommesseinrichtung und jede Batterie eine Spannungsmesseinrichtung zwischen der zugehörigen Speiseleitung und der Masse aufweisen sowie ein Elektromotor und Fahrzeug.

Elektrofahrzeuge mit großer Antriebsleistung werden oft mit hoher Spannung betrieben, damit die Stromstärke und die damit verbundenen Verluste nicht zu groß werden. Die hohe Spannung hat den Nachteil, dass es bei Berührung stromführender Teile durch den Menschen zum Stromschlag kommen kann, woraus Verletzungen resultieren können. Daher müssen beim Handling und bei der Wartung der Batterie besondere Schutzvorkehrungen getroffen werden, was mit zusätzlichem Aufwand und zusätzlichen Kosten verbunden ist.

Dieser Aufwand kann vermieden werden, indem das Fahrzeug mit sogenannter Sicherheitskleinspannung betrieben wird. Sicherheitskleinspannung ist bei Berührung durch den Menschen ungefährlich. Die erforderlichen elektrischen Ströme sind bei Verwendung von Sicherheitskleinspannung höher. Gemäß Stand der Technik sind Fahrzeuge bekannt, die mit Sicherheitskleinspannung betrieben werden, jedoch ist deren Leistung begrenzt oder die Batterien sind nicht entnehmbar.

Kurze Ausführung zu einzelnen Spannungen, welche synonym verwendet werden:

Die Sicherheitskleinspannung (engl. Safety Extra Low Voltage, SELV) ist eine kleine elektrische Spannung, die aufgrund ihrer geringen Höhe und der Isolierung im Vergleich zu Stromkreisen höherer Spannung besonderen Schutz gegen einen elektrischen Schlag bietet.

Mit SELV betriebene Geräte, die selbst keine höheren Spannungen erzeugen, werden gemäß DIN EN 61140 (VDE 0140-1) mit der Schutzklasse III bezeichnet. Die Spannung ist so klein, dass elektrische Körperströme im Normalfall ohne Folgen bleiben. Die Spannungsquelle kann entweder ein Generator sein, zum Beispiel ein Fahrraddynamo, oder eine Batterie. Andernfalls müssen besondere Anforderungen an die Isolierung gegenüber netzspannungsführenden Teilen (z. B. Primärwicklung eines Transformators) eingehalten werden, die als sichere Trennung bezeichnet werden.

Netztransformatoren zur Erzeugung von SELV müssen z. B. so gebaut werden, dass ein Kurzschluss zwischen Primärwicklung und Sekundärwicklung sowie deren Anschlüssen nicht möglich ist. Die Wicklungen können nur dann übereinander liegen, wenn dazwischen eine doppelte oder verstärkte Isolierung liegt. Diese Trennung wird als galvanische Trennung bezeichnet. Oft werden die Wicklungen über- oder nebeneinander in getrennten Isolierstoffkammern untergebracht. Solche Transformatoren mit sicherer elektrischer Trennung werden als Sicherheitstransformatoren (EN61558-2-6 gemäß VDE-Verlag) bezeichnet.

Die Prüfspannung (Bemessungsstoßspannung) hängt von der Überspannungskategorie und der Nennspannung des Stromversorgungssystems ab (IEC EN 60664-1, Tabelle 1; Fachgrundnorm). So beträgt diese im Falle der Überspannungskategorie II für einen einphasigen Anschluss an einem 230-V-Wechselstromnetz (Spannung Leiter-Neutralleiter zwischen 150 und 300 V) 2,5 kV. Bei der doppelten Isolation müssen beide Basisisolationen dieser Bemessungsstoßspannung standhalten. Häufiger wird für die sichere Trennung die verstärkte Isolierung verwendet. Dabei wird die Bemessungsstoßspannung eine Klasse höher angesetzt, das sind im genannten Beispiel 4 kV (IEC EN 60664-1, Tabelle 1). Mit der Bemessungsstoßspannung und dem Verschmutzungsgrad kann die erforderliche Mindestluftstrecke für die sichere Trennung (SELV) ermittelt werden (IEC EN 60664-1,Tabelle 2). Es wird dabei empfohlen, die Bedingung inhomogenes Feld auszuwählen. Im o. g. Beispiel ergeben sich dabei 3 mm (Stoßspannung 4 kV, inhomogenes Feld, Verschmutzungsgrad 2).

Die Mindestkriechstrecken für die elektrische Trennung werden mit Hilfe der Tabellen 3a, 3b und 4 der IEC EN 60664-1 ermittelt. Dazu wird neben der Kenntnis der o. g. Arbeitsspannung (im Beispiel Klasse bis 250 V) und des o. g. Verschmutzungsgrades auch die Kenntnis der Isolierstoffgruppe benötigt (z. B. Isolation im Trafo, CTI-Wert). Diese beträgt im Beispiel 1,8 mm (IG II, 250V, Verschmutzungsgrad 2). Für die sichere Trennung (SELV) muss dieser Wert verdoppelt werden (imBeispiel nun 3,6 mm).

Ist die Nennspannung bei Wechselspannung kleiner als 25 V beziehungsweise bei Gleichspannung kleiner als 60 V, so erübrigt sich bei SELV ein Schutz gegen direktes Berühren. Beispiele sind Kleinspannungs-Halogenglühlampen (z. B. Seilsysteme) oder Modelleisenbahn-Transformatoren. Ist die Spannung höher, muss ein Schutz gegen direktes Berühren sichergestellt werden, zum Beispiel durch Isolierung, Abdeckungen oder Umhüllungen.

Bekannte Quellen von SELV sind Batterien sowie Klingeltransformatoren und Trafos für die Modelleisenbahn (Spielzeugtransformator) sowie Netzteile in Geräten der Schutzklasse III (z. B. Steckernetzteile oder Ladegeräte).

Für Kinderspielzeug darf gemäß EU Richtlinie 2009/48/EG die Nennspannung höchstens 24 V Gleichspannung oder die entsprechende Wechselspannung betragen und der Transformator für die Schutzkleinspannung darf keinen Bestandteil des Spielzeugs bilden.[3]

Bei Arbeiten in engen Räumen und gefährdeten Bereichen zum Beispiel im Innern von Kesseln und Tanks ist für Elektrohandgeräte u. a. eine Sicherheitskleinspannung von 42 V üblich.

Die Schutzkleinspannung (engl. Protected Extra Low Voltage, PELV, früher "Funktionskleinspannung mit sicherer Trennung") bietet ebenfalls Schutz gegen elektrischen Schlag. Sie wird in EN 50178 behandelt.

In Bezug auf die Erdung von PELV-Stromkreisen ist der Einsatzfall zu betrachten. Für allgemeine Installationen (z. B. in Gebäuden) ist in der DIN VDE 0100-410:2007-06 in Abschnitt 414.4.1 festgelegt: "PELV-Stromkreise und/oder Körper der durch die PELV-Stromkreise versorgten Betriebsmittel dürfen geerdet werden." Für die "Elektrische Ausrüstung von Maschinen" ist in der EN 60204-1:2006 (VDE 0113-1), in Abschnitt 6.4.1 festgelegt, dass eine Seite des Stromkreises oder ein Punkt der Energiequelle des PELV-Stromkreises an das Schutzleitersystem angeschlossen werden muss. Diese Aussage bezieht sich also ausschließlich auf die elektrische Installation von Maschinen.

Sichere Trennung bedeutet wie bei SELV-Spannungsquellen, dass der Primärstromkreis von Netz-Transformatoren vom Sekundärstromkreis durch eine doppelte oder verstärkte Isolierung getrennt sein muss. Für die Ermittlung der erforderlichen Bemessungsstoßspannungen sowie der Mindestkriech- und Luftstrecken gilt das im Kapitel "SELV" besagte.

PELV wird eingesetzt, wenn aus betrieblichen Gründen aktive Leiter der Kleinspannung oder die Körper der Betriebsmittel geerdet werden müssen. Das ist beispielsweise der Fall, wenn man einen Potentialausgleich zur Vermeidung von Funkenbildung in Behältern und explosionsgefährdeten Räumen realisieren muss.

Ein weiteres Beispiel sind Audiogeräte und - Verstärker, bei denen die Gehäuse aus Gründen der Abschirmung von Störungen geerdet sein müssen. Die Erdung dient hier nicht als Schutzmaßnahme bzw. Schutzerdung, sondern der Funktion. Dementsprechend bezeichnet man sie als Funktionserdung.

Durch die Gehäuseerdung können unabhängig von der Kleinspannung gefährliche Ableitströme über den Körper fließen, wenn Störungen an anderen Geräten oder Einrichtungen auftreten, bei denen deren berührbare leitfähige Teile Netzspannung annehmen.

Die Funktionskleinspannung (engl. Functional Extra Low Voltage, FELV, früher "Funktionskleinspannung ohne sichere Trennung") ist eine kleine elektrische Spannung, die hinsichtlich ihrer Höhe an sich keine Gefahr beim Berühren darstellt, ihre Erzeugung beinhaltet jedoch keine Schutzmaßnahmen, die im Fehlerfall Gefahren ausschließen.

Doppelte oder verstärkte Isolierungen sind hier nicht vorgesehen. Erdungen und Verbindungen der Stromkreise mit Schutzleitern sind aber zulässig. Gehäuse und Körper müssen jedoch mit dem Schutzleiter der Primärseite verbunden sein.

Um den Schutz gegen direktes Berühren gewährleisten zu können, muss die Isolierung entsprechend der Nennspannung des Primärstromkreises der Stromquelle gewählt werden oder wahlweise auch durch Abdeckungen oder Umhüllungen (Abdeckungen oder Umhüllungen sind dafür bestimmt, das Berühren aktiver Teile zu verhindern). Die Körper der Betriebsmittel des FELV-Stromkreises müssen mit dem Schutzleiter des Primärstromkreises der Stromquelle verbunden werden. (DIN VDE 0100-410)

Die Erdung des Sekundärkreises kann jedoch bei Masseschlüssen zur Selbsteinschaltung von Schützen führen. In nicht geerdeten Sekundärkreisen sind dagegen doppelte Körper- oder Erdschlüsse nötig (zum Beispiel vor und hinter den Schaltgeräten), um Selbsteinschaltung hervorzurufen. Ein Körperschluss oder Erdschluss spannungsführender Leiter führt jedoch bei geerdetem Sekundärkreis zu einer Abschaltung der Überstromschutzorgane, sodass auch ein einzelner Fehler erkannt werden kann.

Typische Anwendungen sind Steuerungen von Maschinen. Bei der Konstruktion muss daher zwischen diesen Fällen abgewogen werden.

Im Weiteren umfasst der Begriff Sicherheitskleinspannung eine Funktionskleinspannung und/oder eine Schutzkleinspannung.

Aufgabe ist es, den Stand der Technik zu verbessern.

Gelöst wird die Aufgabe durch eine Energieversorgungsvorrichtung mit einer Steuereinheit, einer ersten Batterie und einer zweiten Batterie, wobei die Batterie jeweils wenigstens eine galvanische Zelle, eine Speiseleitung insbesondere mit einer zugeordneter Diode und eine Masse aufweisen, wobei die erste und zweite Batterie parallel geschaltet sind und jede Speiseleitung eine Strommesseinrichtung und jede Batterie eine Spannungsmesseinrichtung zwischen der zugehörigen Speiseleitung und der Masse aufweisen, wobei die Steuereinheit derart eingerichtet ist, dass anhand jeweiliger gemessener Stromspeisestärken und/oder jeweiliger gemessener Spannungswerte und deren Differenzen zueinander eine Abgabeleistung der Energieversorgungsvorrichtung durch die Steuereinheit gesteuert und/oder geregelt ist.

So können vorteilhafter Weise leistungsfähige Energieversorgungsvorrichtungen insbesondere für Elektrofahrzeuge bereitgestellt werden, welche der Sicherheit - beispielsweise der Sicherheitskleinspannungsanforderungen - genügen.

Somit können weiterhin vorteilhafterweise aufwändige Sicherheitsmaßnahmen, wie sie beispielsweise in Serie geschaltete Batterien aufweisen müssen, entfallen.

Zudem kann eine Energieversorgungsvorrichtung bereitgestellt werden, welche unter Gewährleistung einer Energieversorgung, beispielsweise eines Antriebs, dafür sorgen, dass beispielsweise eine Batterie oder dergleichen nicht grundentladen wird.

Weiterhin wird durch die vorliegende Energieversorgungsvorrichtung, insbesondere durch die vorgesehene Diode, erreicht, dass beispielsweise bei steigendem Innenwiderstandes einer Batterie kein Stromfluss aus den übrigen Batterien beispielsweise über den Umrichter in diese Batterie hinein erfolgt. Somit wird die gespeicherte Energie beispielsweise im Wesentlichen für die Motorleistung zur Verfügung gestellt.

Die Dioden haben insbesondere die Funktion, die Batterien davor zu schützen, dass diese beispielsweise während eines Fahrbetriebs unbeabsichtigt geladen werden. Zwar funktionier vorliegender Aufbau auch ohne die vorgesehenen Dioden, jedoch kann insbesondere mit diesen die Lebenserwartung der Batterien gesteigert werden.

Folgendes Begriffliche sei erläutert:

Die "Energieversorgungsvorrichtung" kann insbesondere derart eingesetzt werden, dass ein Elektromotor mit der Energie dieser Energieversorgungsvorrichtung gespeist werden kann. Dabei kann insbesondere die in den Batterien gespeicherte elektrische Energie als Wechselspannung dem Elektromotor zur Verfügung gestellt werden.

Die "Steuereinheit" umfasst insbesondere einen elektronischen Rechner, welcher einen Steuer- und/oder Regelalgorithmus abbildet. Dem Steuergerät sind insbesondere Sensoren und Aktuatoren zugeordnet, wodurch abhängig von einem am Sensor anliegenden Eingabesignal ein am Aktuator vorliegendes Stellsignal berechnet und/oder erzeugt wird. Bei den vorliegenden Sensoren kann es sich insbesondere um eine der Strommesseinrichtungen oder einer der Spannungsmesseinrichtungen handeln. Der Aktuator, kann vorliegend beispielsweise ein Umrichter sein, welcher der die von den Batterien gelieferte Spannung in ein Wechselspannungssignal vorgegebener Leistung umwandelt.

Die galvanische Zelle", auch galvanisches Element oder galvanische Kette genannt, ist eine Vorrichtung zur spontanen Umwandlung von chemischer in elektrischer Energie. Grundsätzlich kann jede Kombination von zwei verschiedenen Elektroden und einem Elektrolyten als galvanisches Element bezeichnet werden. Die galvanischen Elemente können insbesondere als Gleichspannungsquellen dienen. Insbesondere bilden mehrere galvanische Zellen vorliegend eine Batterie.

Diese "Batterie" kann auch als Voltasche' Säule oder Zambonisäule bezeichnet werden. Von dem Begriff Batterie sind sowohl Primärzellen oder Primärelemente (nicht wiederaufladbare galvanische Zellen) und wieder aufladbare Sekundärzellen oder Sekundärelemente, welche Akkumulatoren bilden, bezeichnet werden.

Als "Speiseleitung" wird insbesondere die Leitung bezeichnet, durch welche die Batterie Strom abgibt.

Eine "Diode" ist ein elektrisches Bauelement, das Strom in eine Richtung fast ungehindert passieren lässt und in einer anderen Richtung fast gänzlich isoliert. Eine ideale Diode sperrt in eine Richtung den Strom vollständig, während sie in der anderen Richtung den Strom ungehindert ohne Widerstand leitet. Vorliegend ist die Diode optional. Die Schaltung funktioniert auch ohne vorgesehene Diode.

Unter einer "Parallelschaltung", auch Nebenschaltung genannt, wird in der Elektrotechnik und Elektronik insbesondere eine Art der Schaltung der Elemente in einem Schaltkreis verstanden, bei dem Bauteile parallel geschaltet sind, sodass ihre gleichnamigen Pole jeweils miteinander verbunden sind. Grundsätzlich ist die Anzahl der parallel geschalteten Elemente beliebig. Vorliegend sind insbesondere die Pluspole der Batterien direkt oder indirekt und die Massen der Batterien direkt oder indirekt miteinander verbunden. Unter indirektem Verbinden in diesem Zusammenhang wird verstanden, dass bezüglich des Pols zwischen den beiden Polen ein weiteres Bauelement wie beispielsweise ein Widerstand geschaltet ist.

Die "Strommesseinrichtung" ist eine Einrichtung, welche direkt in der Speiseleitung angeordnet ist und einen Wert bezüglich des fließenden Stroms in der Speiseleitung ermittelt.

Die "Spannungsmesseinrichtung" bestimmt insbesondere die Spannung, welche zwischen der Speiseleitung und der Masse der jeweiligen Batterie anliegt.

Die "Masse" ist vorliegend das Referenzpotential, zu den die jeweiligen Spannungen ermittelt werden. Die "Differenzen" der Spannungswerte oder die "Differenzen" der Stromspeisestärken werden insbesondere dadurch ermittelt, dass die Zahlenwerte zweier unterschiedlicher Strommesseinrichtungen oder die Differenzwerte zwischen zwei Spannungsmesseinrichtungen bestimmt werden.

Die "Abgabeleistung" ist insbesondere die elektrische Leistung, welche einem Elektromotor zur Verfügung gestellt wird.

Unter "Steuern" wird insbesondere ein Vorgang betrachtet, bei dem anhand eines Messwerts ein dezidierter Stellwert zum Bewirken einer Zielgröße - hier insbesondere die Abgabeleistung - ermittelt wird.

Bei der "Regelung" wird zusätzlich eine zu regelnde Größe rückgekoppelt.

In einer weiteren Ausführungsform weist die Energieversorgungsvorrichtung weitere zur ersten Batterie und zur zweiten Batterie parallel geschaltete Batterien auf, welche jeweils wenigstens eine galvanische Zelle, eine Speiseleitung insbesondere mit zugeordneter Diode und eine Masse aufweisen, und jede Speiseleitung eine Strommesseinrichtung und jede Batterie eine Spannungsmesseinrichtung zwischen der zugehörigen Speiseleitung und der Masse aufweisen.

Dadurch kann eine Energieversorgungsvorrichtung mit einer höheren Kapazität und Speicherung an Energie zur Verfügung gestellt werden. Insbesondere können dabei zu sämtlichen gemessenen Spannungswerten und/oder gemessenen Stromwerten in den jeweiligen Speiseleitungen sämtliche permutierten Spannungsdifferenzen oder permutierten Stromdifferenzen bestimmt werden, anhand deren die Steuerung und/oder Regelung erfolgt. Somit stellen die vorliegenden Batterien lediglich eine Fortführung des Konzeptes mit zwei Batterien da.

Um besonders effektive Batterien bereitstellen zu können, können diese weitere galvanische Zellen aufweisen.

In einer weiteren Ausführungsform erfolgt die Steuerung und/oder Regelung der Abgabeleistung beim Überschreiten eines Spannungs-Schwellwertes durch eine Spannungsdifferenz und/oder Stromschwellwertes durch eine Stromdifferenz.

So können beispielsweise unterschiedliche Innenwiderstände, welche beispielsweise zu leichten Spannungs- oder Stromänderungen zu der zugehörigen Batterie führen noch als tolerabel gelten und weiterhin zur der Abgabeleistung zur Verfügung stehen.

Beispielsweise kann der Spannungsschwellwert ca. 10% der Gesamtspannung und auch der Stromschwellwert 10% des Maximalstromes in einer Speiseleitung umfassen.

Beispielsweise ist bei einer Versorgungsspannung von 48V eine Differenzspannung von 4,8V gerade noch tolerabel, während bei 4,9V die Steuerung oder die Regelung einsetzt.

Um beispielsweise eine Bemessungsleistung einer Batterie oder mehrerer Batterien logisch oder leistungsmäßig zu entfernen, kann beim Überschreiten des Spannungs-Schwellwertes die Abgabeleistung um eine Einzelabgabeleistung einer Batterie oder mehrerer Batterien vermindert sein.

Bei der "Einzelabgabeleistung" handelt es sich insbesondere um die Bemessungsleistung der Batterie. Die Bemessungsleistung ist dabei insbesondere die Leistung für die die jeweilige Batterie ausgelegt ist.

Folgendes Beispiel: Bei mehr als zwei Batterien wird wie folgt vorgegangen. Es wird ermittelt, ob die Spannungsdifferenz zwischen Zelle 1 (Zelle 1 sei diejenige Zelle, welche momentan den Strom mit der größten Stromstärke liefert) und jeweils einer anderen Zelle den Grenzwert überschreitet. Ist dies der Fall, wird die maximal zu entnehmende Leistung jeweils um die Bemessungsleistung einer Batterie vermindert.

Es soll bei drei Batterien gelten:

Bemessungsstrom jeder einzelnen Batterie: 60A

Bemessungsleistung jeder einzelnen Batterie: 3kW

Die Batterien haben folgende (gemessene) Werte, wobei der Index die jeweilige Nummer der Batterie angibt: (1. Beispiel) $U_1$=50V; $U_2$=49V; $U_3$=49V. Daraus resultiert eine maximale Abgabeleistung von Pmax=9kW. (2. Beispiel) Für $U_1$=50V; $U_2$=40V; $U_3$=49V. Daraus resultiert eine maximale Abgabeleistung von Pmax=6kW. (3. Beispiel) Für $U_1$=50V; $U_2$=40V; $U_3$=41V. Daraus resultiert eine maximale Abgabeleistung von Pmax=3kW.

In einer weiteren Ausführungsform kann beim Überschreiten des Stromschwellwertes die Leistung bei zwei Batterien gemäß

$$P_{\max} = U_{bat} I_{\max} \left( 1 + \frac{I_2}{I_1} \right) \quad \left| I_1 > I_2 \text{ mit } U_{bat} = \min(U_1, U_2), \right.$$

vermindert werden, wobei $I_1$ die aktuelle Stromstärke des elektrischen Stroms aus derjenigen Batterie ist, welche jeweils aktuell am meisten Strom liefert (Zelle 1) und wobei $I_2$ entsprechend die aktuelle Stromstärke aus der anderen Batterie ist, welche gerade weniger Strom liefert als Zelle 1 und wobei Imax die maximale Stromstärke der einzelnen Batterie gemäß Auslegung, Pmax der Momentanwert der aktuell maximal abrufbaren Leistung, Ubat die aktuell niedrigste Spannung aller parallel geschalteten Batterien ist sowie $U_1$ die aktuelle Spannung derjenigen Batterie ist, welche momentan die größere Stromstärke liefert und $U_2$ die aktuelle Spannung derjenigen Batterie ist, welche momentan die niedrige Stromstärke liefert.

Für N Batterien gilt

$$P_{\max} = U_{bat} I_{\max} \left( 1 + \frac{I_2}{I_1} + \frac{I_3}{I_1} + \ldots + \frac{I_N}{I_1} \right) \quad \left| I_1 > I_2; I_1 > I_3; \ldots; I_1 > I_N \right.$$

$U_{bat}$=min($U_1$,$U_2$,$U_3$,...,$U_n$) wobei $U_3$ die aktuelle Spannung einer derjenigen Batterien ist, welche momentan eine niedrige Stromstärke liefern als Zelle 1 (Zelle 1 liefert die Spannung und die Stromstärke) und $U_3$ die aktuelle Spannung einer derjenigen Batterien ist, welche momentan eine niedrige Stromstärke liefern als Zelle 1 ($U_1$) sowie $I_3$ die aktuelle Stromstärke einer derjenigen Batterien ist, welche momentan eine niedrige Stromstärke liefern als Zelle 1 IN die aktuelle Stromstärke einer derjenigen Batterien ist, welche momentan eine niedrige Stromstärke liefern als Zelle 1.

Um für die Steuereinheit einen effektiven Aktuator bereitstellen zu können, kann die Steuereinrichtung einen Umrichter aufweisen, welcher die Spannung der Batterien in eine Wechselspannung umwandelt und bei der Umwandlung die Abgabeleistung einstellt. Dies kann insbesondere durch eine feldorientierten Steuerung (siehe hierzu "Hans-Dieter Stölting, Eberhard Kallenbach: Handbuch Elektrische Kleinantriebe; Carl Hanser Verlag GmbH & Co. KG; ISBN-10: 3446423923", dessen diesbezüglicher Inhalt Bestandteil der hier vorliegenden Schrift ist) durch drehzahlabhängige Anpassung der maximalen Stromstärke des momentbildenden Stroms erfolgen

In einer weiteren Ausführungsform ist eine oder sind mehrere Dioden derart ausgestaltet, dass das Verhalten einer idealen Diode nachgebildet ist. Dies kann beispielsweise dadurch erfolgen, dass eine Schaltung anstelle der Diode eingeführt wird, die die realen Einflüsse der Diode dahingehend kompensiert, dass sich diese Diode quasi wie eine ideale Diode verhält. Insbesondere kann eine derartige Schaltung eine eigene Energieversorgung aufweisen. Beispielsweise kann das Bauteil LTC4357 - Positive High Voltage Ideal Diode Controller (http://www.linear.com/product/LTC4357) der Firma Linear Technology erfolgen.

In einer weiteren Ausführungsform kann oder können eine Versorgungsspannung einer Batterie, mehrere Batterien oder sämtlicher Batterien den Anforderungen der Sicherheitskleinspannung, einer Schutzkleinspannung oder einer Funktionskleinspannung erfüllen.

Zur Definition sei hier auf die eingangs erläuternden Ausführungen verwiesen.

Dadurch ist es vorliegend möglich, unter Gewährleistung dieser Sicherheitsaspekte einen Elektromotor effektiv zu betreiben, ohne die Spannung derart zu erhöhen, dass ein enormer Sicherheitsaufwand für den Betrieb umgesetzt werden muss.

In einem weiteren Aspekt der Erfindung wird die Aufgabe gelöst durch einen Elektromotor, insbesondere für ein Fahrzeug, welcher eine zuvor beschriebene Energieversorgungsvorrichtung aufweist. Somit kann ein Bauteil bereitgestellt werden, welches so in das entsprechende Fahrzeug wie beispielsweise ein Auto, Lastkraftwagen, Zweirad oder dergleichen eingesetzt werden kann.

In einem weiteren Aspekt der Erfindung wird die Aufgabe gelöst durch ein Fahrzeug, welches einen zuvor beschriebenen Elektromotor aufweist.

Derartige Fahrzeuge haben den Vorteil, dass diese eben nicht mit für Menschen gefährlichen Spannungen betrieben werden, sondern ein hohes Maß an Sicherheit für den Fahrer und/oder einen Mechaniker gewährleistet.

Im Weiteren wird die Erfindung anhand eines Ausführungsbeispiels näher erläutert. Es zeigt die

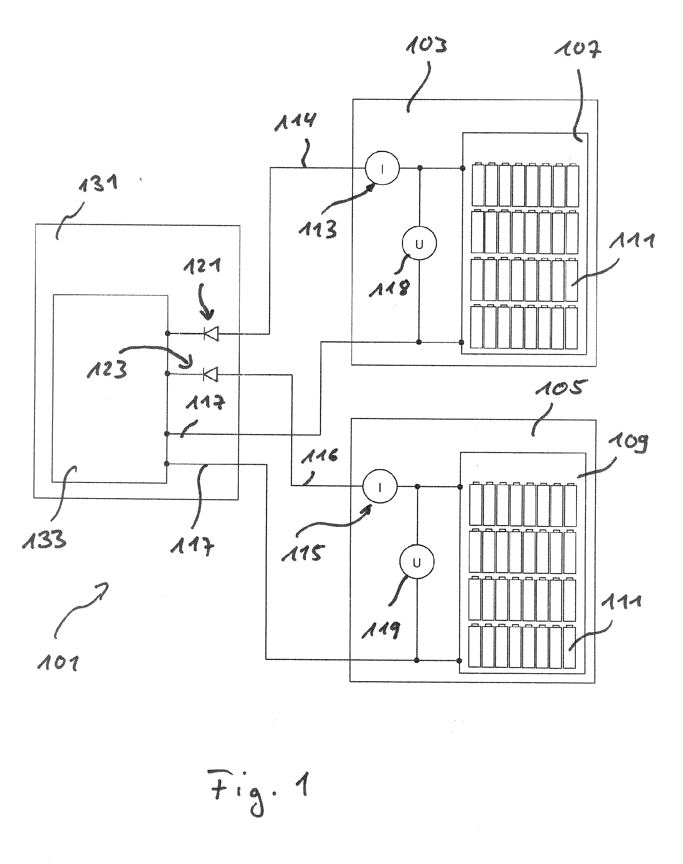

Figur 1    eine schematische Darstellung einer Energieversorgungsvorrichtung mit zwei Akku-Packs mit einem Steuergerät, Sensoren und einem zugeordneten Aktuator.

Eine Energieversorgungsvorrichtung 101 weist einen ersten Akku-Pack 103 und einen zweiten Akku-Pack 105 auf. Der erste Akku-Pack 103 weist einen ersten Energiespeicher 107 mit zugehörigen galvanischen Zellen 111 auf. In den galvanischen Zellen 111 ist chemische Energie gespeichert, welche als elektrische Energie abgegeben wird. Zwischen der Masse 117 und der ersten Speiseleitung 114 ist ein Spannungsmesser 118 angeordnet. Die erste Speiseleitung 114 ist aufgetrennt worden und ein Strommesser 113 ist in die Trennungsstelle eingeführt worden. Weiterhin ist in der ersten Speiseleitung eine ideale Diode 121 derart angeordnet, dass elektrische Energie aus dem Energiespeicher 107 in ein Motorsteuergerät 131, jedoch nicht aus dem Motorsteuergerät 131 in den Energiespeicher fließen kann.

Die idealisierte Diode 121 ist durch eine entsprechende elektronische Schaltung realisiert. Alternativ ist diese idealisierte Diodenschaltung durch eine reale Leistungsdiode ersetzt.

Der zweite Akku-Pack 105 ist analog wie der erste Akku-Pack 103 aufgebaut, wobei vorliegend andere Bezugszeichen verwendet wurden. So hat der Energiespeicher das Bezugszeichen 109, der zweite Spannungsmesser das Bezugszeichen 119, der zweite Strommesser das Bezugszeichen 115, die zweite Speiseleitung das Bezugszeichen 116, die idealisierte Diodenschaltung das Bezugszeichen 123.

Sowohl die Speiseleitung 114 des ersten Akku-Packs 103 als auch die Speiseleitung 116 des zweiten Akku-Packs 105 werden in einen Umrichter 133 geführt. Zusätzlich sind die Massen 117 verbindend mit dem Umrichter ausgestaltet.

Die Messdaten des ersten Strommessers 113 und des zweiten Strommessers 115 sowie die Spannungswerte des ersten Spannungsmessers 118 und des zweiten Spannungsmessers 119 werden dem Motorsteuergerät 131 zugeführt. Das Motorsteuergerät 131 bereitet diese Messdaten entsprechend auf und ermittelt mittels seines Rechners den Betrag einer Spannungsdifferenz zwischen dem ermittelten Wert des ersten Spannungsmessers 118 und dem ermittelten Wert des zweiten Spannungsmessers 119 sowie einen Betrag der Differenz des Wertes des ersten Strommessers 113 und des zweiten Strommessers 115.

Die übliche Spannung der Speiseleitungen 114, 116 gegenüber der Masse 117 beträgt vorliegend 48V. Ein Spannungsschwellwert ist auf 4,8V festgelegt und in dem Motorsteuergerät 131 abgelegt. Diese Gleichspannung von 48V wird entsprechend der Stellwerte des Motorsteuergerätes 131 durch einen Umrichter 133 derart in eine Wechselspannung umgewandelt, dass die Frequenz und Spannung für einen nachgelagerten Elektromotor als Wechselspannung ausgegeben wird.

Vorliegend ermittelt das Motorsteuergerät 131 permanent den Betrag der Differenz des ermittelten Spannungswertes des ersten Spannungsmessers 118 und des zweiten Spannungsmessers 119. Sobald diese Differenz einen Wert von > 4,8V aufweist, wird die Abgabeleistung des Steuergeräts an den Motor auf die Bemessungsleistung einer Batterie reduziert.

Analog wird bei unterschiedlichen Stromstärken verfahren. Der Strom bei einer Bemessungsleistung von 3kW pro Batterie sein $I_1=I_2=60A$ und die zugehörige Spannung sei $U_1=U_2=50V$. Die Abgabeleistung an den Motor ist P=6kW. Mithin ist eine Stromdifferenz von 0A gegeben. Reduziert sich ein gemessener Strom einer Batterie auf 55A, dies entspricht einem Betrag einer Stromdifferenz von 5A, wird die Abgabeleistung auf 5kW reduziert. Überschreiten die Stromdifferenz den Betragswert von 8A, wird die Abgabeleistung durch das Steuergerät 131 auf 3kW reduziert.

Bezugszeichenliste

| 101 | Energieversorgungsvorrichtung |
| 103 | erster Akku-Pack |
| 105 | zweiter Akku-Pack |
| 107 | erster Energiespeicher |
| 109 | zweiter Energiespeicher |
| 111 | galvanische Zellen |
| 113 | erster Strommesser |
| 114 | erste Speiseleitung |
| 115 | zweiter Strommesser |
| 116 | zweite Speiseleitung |
| 117 | Masse |
| 118 | erster Spannungsmesser |
| 119 | zweiter Spannungsmesser |
| 121 | erste Diodenschaltung |
| 123 | zweite Diodenschaltung |
| 131 | Motorsteuergerät |
| 133 | Umrichter |

**Patentansprüche**

1. Energieversorgungsvorrichtung (101) mit einer Steuereinheit (131), einer ersten Batterie (103) und einer zweiten Batterie (105), wobei die Batterien jeweils wenigstens eine galvanische Zelle (111), eine Speiseleitung (114, 116), wobei die Speiseleitung insbesondere eine zugeordnete Diode (121, 123) aufweist, und eine Masse (117) aufweisen, wobei die erste und zweite Batterie parallel geschaltet sind und jede Speiseleitung eine Strommesseinrichtung (113, 115) und jede Batterie eine Spannungsmesseinrichtung (118, 119) zwischen der zugehörigen Speiseleitung und der Masse aufweisen, **dadurch gekennzeichnet, dass** die Steuereinheit derart eingerichtet ist, dass anhand jeweiliger gemessener Stromspeisestärken und/oder jeweiliger gemessener Spannungswerte und deren Differenzen zueinander eine Abgabeleistung der Energieversorgungsvorrichtung durch die Steuereinheit gesteuert und/oder geregelt ist.

2. Energieversorgungsvorrichtung nach Anspruch 1, **gekennzeichnet durch** weitere zur ersten Batterie und zweiten Batterie parallelgeschaltete Batterien, welche jeweils wenigstens eine galvanische Zelle, eine Speiseleitung, wobei die Speiseleitung insbesondere eine zugeordneter Diode aufweist, und eine Masse aufweisen, und jede Speiseleitung eine Strommesseinrichtung und jede Batterie eine Spannungsmesseinrichtung zwischen der zugehörigen Speiseleitung und der Masse aufweisen.

3. Energieversorgungsvorrichtung nach einem der vorherigen Ansprüchen, **dadurch gekennzeichnet, dass** die Batterien weitere galvanische Zellen aufweisen.

4. Energieversorgungsvorrichtung nach einem der vorherigen Ansprüche, **dadurch gekennzeichnet, dass** die Steuerung und/oder Regelung der Abgabeleistung beim Überschreiten eines Spannungs-Schwellwertes durch eine SpannungsDifferenz und/oder Strom-Schwellwertes durch eine StromDifferenz erfolgt.

5. Energieversorgungsvorrichtung nach Anspruch 4, **dadurch gekennzeichnet, dass** beim Überschreiten des Spannungs-Schwellwertes die Abgabeleistung um eine Einzelabgabeleistung einer Batterie oder mehrerer Batterien vermindert ist.

6. Energieversorgungsvorrichtung nach Anspruch 4 oder 5, **dadurch gekennzeichnet, dass** beim Überschreiten des Strom-Schwellwertes bei N-Batterien die Leistung gemäß

$$P_{\max} = U_{bat} I_{\max}\left(1 + \frac{I_2}{I_1} + \frac{I_3}{I_1} + \ldots + \frac{I_N}{I_1}\right) \quad \big| I_1 > I_2; I_1 > I_3; \ldots; I_1 > I_N$$

mit

$$U_{bat} = \min(U_1, U_2, U_3, \ldots, U_N),$$

vermindert wird, wobei $I_1$ die aktuelle Stromstärke des elektrischen Stroms aus derjenigen Batterie ist, welche jeweils aktuell am meisten Strom liefert und wobei $I_2$ entsprechend die aktuelle Stromstärke aus einer anderen Batterie ist, welche gerade weniger Strom liefert als die zur $I_1$ zugehörige, und wobei $I_3$ und IN die aktuellen Stromstärken derjenigen Batterien sind, welche momentan eine niedrige Stromstärke liefern als die Batterie zum Spannungswert $U_1$ und wobei Imax die maximale Stromstärke der einzelnen Batterien gemäß Auslegung, Pmax der Momentanwert der aktuell maximal abrufbaren Leistung, Ubat die aktuell niedrigste Spannung aller parallel geschalteten Batterien ist sowie $U_1$ die aktuelle Spannung derjenigen Batterie ist, welche momentan die größere Stromstärke liefert und $U_2$ die aktuelle Spannung derjenigen Batterie ist, welche momentan die niedrige Stromstärke liefert sowie $U_3$ und $U_N$ die aktuellen Spannungen derjenigen Batterien sind, welche momentan eine niedrigere Stromstärke liefern als sie Batterie zum Spannungswert U1.

7. Energieversorgungsvorrichtung nach einem der vorherigen Ansprüche, **dadurch gekennzeichnet, dass** die Steuereinheit einen Umrichter (133) aufweist, welcher die Spannung der Batterien in eine Wechselspannung umwandelt und bei der Umwandlung die Abgabeleistung einstellt.

8. Energieversorgungsvorrichtung nach einem der vorherigen Ansprüche, **dadurch gekennzeichnet, dass** einer oder mehrere der Dioden derart ausgestaltet ist oder sind, dass das Verhalten einer idealen Diode nachgebildet ist.

9. Energieversorgungsvorrichtung nach einem der vorherigen Ansprüche, **dadurch gekennzeichnet, dass** eine Versorgungsspannung einer Batterie, mehrerer Batterien oder sämtlicher Batterien die Anforderungen einer Sicherheitskleinspannung, einer Schutzkleinspannung oder einer Funktionskleinspannung erfüllen.

10. Elektromotor, insbesondere für ein Fahrzeug, **gekennzeichnet durch** eine Energieversorgungsvorrichtung nach einem der vorherigen Ansprüche.

11. Fahrzeug, welches einen Elektromotor nach Anspruch 10 aufweist.

Fig. 1

**Europäisches Patentamt**
**European Patent Office**
**Office européen des brevets**

## EUROPÄISCHER RECHERCHENBERICHT

**Nummer der Anmeldung**

EP 14 17 5302

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2013/154360 A1 (ITO SATOSHI [JP]) 20. Juni 2013 (2013-06-20) | 1-5,8-11 | INV. B60L3/00 B60L11/18 B60L3/06 |
| Y | * Abbildungen 1,2 * ----- | 7 | |
| A | Member Of The Forum Cback Forum - Christian Knerr: "Inselanlage im Norden! - www.kleinwindanlagen.de", , 11. März 2008 (2008-03-11), XP055151386, Gefunden im Internet: URL:http://www.kleinwindanlagen.de/Forum/cf3/topic.php?t=1447&page=2 [gefunden am 2014-11-06] * Eine Batterieladebank wo sich die Batterien gegenseitig nicht entladen; Seite 3 - Seite 3 * ----- | 1 | |
| Y | WO 2012/038183 A2 (BOSCH GMBH ROBERT [DE]; FEUERSTACK PETER [DE]; WEISSENBORN ERIK [DE];) 29. März 2012 (2012-03-29) * Abbildung 1 * ----- | 7 | |
| A | JP 2004 312863 A (HITACHI LTD; HIGASHI NIPPON RYOKAKU TETSUDO) 4. November 2004 (2004-11-04) * das ganze Dokument * ----- | 1-11 | RECHERCHIERTE SACHGEBIETE (IPC) B60L H02J |

Der vorliegende Recherchenbericht wurde für alle Patentansprüche erstellt

| Recherchenort | Abschlußdatum der Recherche | Prüfer |
|---|---|---|
| Den Haag | 13. November 2014 | Schury, Dominik |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 5302

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2014

| Im Recherchenbericht angeführtes Patentdokument | Datum der Veröffentlichung | Mitglied(er) der Patentfamilie | Datum der Veröffentlichung |
|---|---|---|---|
| US 2013154360 A1 | 20-06-2013 | CN 103068620 A<br>DE 112011102789 T5<br>JP 2012050158 A<br>US 2013154360 A1<br>WO 2012026278 A1 | 24-04-2013<br>04-07-2013<br>08-03-2012<br>20-06-2013<br>01-03-2012 |
| WO 2012038183 A2 | 29-03-2012 | CN 103119824 A<br>DE 102010041074 A1<br>EP 2619875 A2<br>US 2013249474 A1<br>WO 2012038183 A2 | 22-05-2013<br>22-03-2012<br>31-07-2013<br>26-09-2013<br>29-03-2012 |
| JP 2004312863 A | 04-11-2004 | JP 4593081 B2<br>JP 2004312863 A | 08-12-2010<br>04-11-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HANS-DIETER STÖLTING.** Eberhard Kallenbach: Handbuch Elektrische Kleinantriebe. Carl Hanser Verlag GmbH & Co. KG

- *Bauteil LTC4357 - Positive High Voltage Ideal Diode Controller,* http://www.linear.com/product/LTC4357